(19) Europäisches Patentamt
European Patent Office
Office européen des brevets

(11) **EP 2 895 325 B1**

(12) **EUROPÄISCHE PATENTSCHRIFT**

(45) Veröffentlichungstag und Bekanntmachung des Hinweises auf die Patenterteilung:
**09.11.2016 Patentblatt 2016/45**

(21) Anmeldenummer: **13759723.3**

(22) Anmeldetag: **05.09.2013**

(51) Int Cl.:
*B32B 27/08* (2006.01)　　*B32B 27/36* (2006.01)
*B32B 37/04* (2006.01)　　*B42D 25/00* (2014.01)

(86) Internationale Anmeldenummer:
**PCT/EP2013/068379**

(87) Internationale Veröffentlichungsnummer:
**WO 2014/040907 (20.03.2014 Gazette 2014/12)**

(54) **VERFAHREN ZUM FLÄCHIGEN VERBINDEN VON POLYMERFOLIEN MITTELS EINES LAMINIERVERFAHRENS**

METHOD FOR CONNECTING POLYMER FILMS OVER THEIR SURFACE AREA BY MEANS OF LAMINATION

PROCÉDÉ D'ASSEMBLAGE À PLAT DE FILMS POLYMÈRES AU MOYEN D'UN PROCÉDÉ DE STRATIFICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.09.2012 DE 102012216126**

(43) Veröffentlichungstag der Anmeldung:
**22.07.2015 Patentblatt 2015/30**

(73) Patentinhaber: **Bundesdruckerei GmbH**
**10969 Berlin (DE)**

(72) Erfinder:
• **SIEBERT, Martin**
**10965 Berlin (DE)**

• **KNEBEL, Michael**
**10405 Berlin (DE)**
• **EHREKE, Jens**
**12587 Berlin (DE)**

(74) Vertreter: **Bressel, Burkhard**
**Patentanwälte Bressel und Partner mbB**
**Potsdamer Platz 10**
**10785 Berlin (DE)**

(56) Entgegenhaltungen:
**EP-A1- 2 095 944　　DE-U1-202004 004 108**
**US-A1- 2006 251 869**

**Beschreibung**

Die vorliegende Erfindung betrifft ein Verfahren zum flächigen Verbinden von mindestens zwei Polymerfolien mittels eines Laminierverfahrens, wobei ein Polymerfolienverbund entsteht, ferner den aus den Polymerfolien gebildeten Polymerfolienverbund, dessen Verwendung und ein aus dem Polymerfolienverbund gebildetes Wert- und/oder Sicherheitsdokument. Ein derartiges Dokument kann beispielsweise ein Reisepass, Personalausweis, Führerschein oder eine andere ID-Karte oder ein Zugangskontrollausweis, ein Fahrzeugschein, Fahrzeugbrief, Visum, Scheck, ein Zahlungsmittel, insbesondere eine Banknote, eine Scheck-, Bank-, Kredit- oder Barzahlungskarte, Kundenkarte, Gesundheitskarte, Chipkarte, ein Firmenausweis, Berechtigungsnachweis, Mitgliedsausweis, Geschenk- oder Einkaufsgutschein, Frachtbrief oder ein sonstiger Berechtigungsnachweis, ein Steuerzeichen, Postwertzeichen, Ticket, (Spiel-)Jeton, Haftetikett (beispielsweise zur Produktsicherung) oder ein anderes ID-Dokument sein.

Derartige Produkte werden typischerweise in normierten Formaten hergestellt, beispielsweise im ID 1-, ID 2- oder ID 3-Format gemäß ISO 7810. Diese Dokumente können demnach in Form einer Karte vorliegen. Alternativ können sie auch in Form eines Blattes, einer Folie, eines gebundenen Heftes oder Buches oder in noch einer anderen Form vorliegen. Diese Produkte können grundsätzlich aus einem organischen Polymer oder einem Keramikwerkstoff, Papier, Pappe oder aus Metall bestehen oder dieses enthalten, wobei für die Herstellung von ID-Karten meist Polyvinylchlorid (PVC) und Polyester zum Einsatz kommen. Polycarbonat (PC) wird überwiegend für höherwertige bzw. besonders fälschungssichere Produkte verwendet, da nur dieses Material sehr gut mittels Laserbestrahlung beschreibbar ist, denn es sind sehr gute Schwärzungsgrade erreichbar. Beispielsweise können diese Produkte durch Laminieren aus Folienlagen hergestellt werden. Beispielsweise bestehen die Folienlagen aus Materialien, wie PC, PVC, Polyester, beispielsweise Polyethylenterephthalat (PET), Polyolefinen, beispielsweise Polyethylen (PE) und Polypropylen (PP), Acrylnitril-Butadien-Styrol-Copolymer (ABS), Polyurethan (PU), Polyetheretherketon (PEEK) oder anderen thermoplastisch verarbeitbaren Materialien, Materialverbünden, kunststoffkaschierten, papierartigen Materialien oder papierartigen Materialien, wie Teslin, (DE 10 2007 018 450 A1).

Üblicherweise werden Smartcards und andere ID-Dokumente aus Plastikmaterialien hergestellt, um die notwendige Flexibilität zu gewährleisten. Langlebige Sicherheitsprodukte werden im Allgemeinen durch eine Lamination einer Mehrzahl teilweise grafisch gestalteter PC-Folien in einer Heiß-Kalt-Laminierpresse im Bogenmehrfachformat hergestellt oder auch in einem Durchlauf-Laminierverfahren mit mehreren hintereinander angeordneten Heiz- und Kühl-Press-Stationen. Hierfür verwendete Laminierpressen können ohne und mit Vakuum betrieben werden, wobei der Vakuumprozess den Laminierzyklus verlangsamt und im Allgemeinen sinnvoller Weise nur dann eingesetzt wird, wenn Innenlagen mit zusätzlichen Elementen, wie RFID-ICs, RFID-Antennen, Anzeigeeinheiten, Sensoren, Batterien und dergleichen, integriert werden sollen.

Ein derartiges Verfahren ist beispielsweise in DE 10 2009 060 862 A1 beschrieben: In dieser Druckschrift wird ein Verfahren zum Laminieren von Folienlagen angegeben. Dieses Verfahren umfasst die folgenden Verfahrensschritte: Bereitstellen einer das elektronische Bauelement tragenden Trägerfolienlage und einer Fließfolienlage, Stapeln der Trägerfolienlage und der Fließfolienlage unter Bildung eines Folienlagenstapels, Laminieren der Folienlagen unter Bildung eines Folienlagenlaminats durch Erwärmen des Folienlagenstapels. Um eine Schädigung der elektronischen Bauelemente beim Laminationsprozess zu vermeiden, insbesondere im Bereich der Anschlusskontakte eines Chips oder eines anderen Bauelements, wird beim Laminieren darauf geachtet, dass die Fließfolienlage vor der Trägerfolienlage erweicht. Hierzu kann beispielsweise ein Temperaturgradient während des Aufheizvorganges des Folienlagenstapels senkrecht zu den Oberflächen der Folienlagen erzeugt werden. Zusätzlich zu den genannten Folienlagen kann der Stapel außerdem eine Ausgleichsfolienlage enthalten, der mit einer Aussparung für das elektronische Bauelement ausgestattet ist.

Zur nachträglichen Personalisierung eines Sicherheits- oder Wertdokuments ist in DE 10 2006 009 128 A1 angegeben, dass das Dokument vorzugsweise aus einem weitgehend transparenten Polymer, insbesondere aus PC, das Laserinitiatoren als Additive enthält, bestehen kann, wobei die Laserinitiatoren bei Bestrahlung mit einem Laser entsprechend der einzubringenden Personalisierungsinformation gefärbt, insbesondere geschwärzt, werden.

Für eine zusätzliche Integration von elektronischen Bauelementen in das Dokument stellt sich jedoch das vorstehend beschriebene Problem, wonach diese durch den Laminationsprozess erheblich mechanisch belastet werden, sodass Schädigungen an diesen und/oder in deren näherer Umgebung leicht auftreten können. Das in DE 10 2009 060 862 A1 beschriebene Verfahren eignet sich zwar grundsätzlich, um derartige Probleme zu überwinden. Jedoch ist das Verfahren aufwändig, sodass nach weiteren Möglichkeiten gesucht wird, die geschilderten Schwierigkeiten zu bewältigen.

Soweit in dieser Beschreibung und in den Ansprüchen die Begriffe "eine Polymerfolie ist im Wesentlichen aus (einem) Polyethylenterephthalat gebildet" und "eine Polymerfolie ist im Wesentlichen aus (einem) Polycarbonat gebildet" oder dergleichen verwendet werden, ist darunter zu verstehen, dass die Polymerfolie ausschließlich aus dem genannten Polymer besteht und somit keine weiteren Bestandteile enthält oder dass die Polymerfolie zusätzlich zu dem genannten Polymer in geringer Menge, beispielsweise bis zu 10 Gew.-%, vorzugsweise bis zu 5 Gew.-% und noch weiter bevorzugt bis zu 2 Gew.-%, andere Stoffe, beispielsweise andere Polymere, die mit dem Polymer vermischt sind, ferner Füllstoffe, wie Pigmente und Farbstoffe, und/oder andere Additive, Verstärkungsmaterialien, wie Glasfasermatten, und dergleichen enthält.

Soweit in dieser Beschreibung und in den Ansprüchen der Begriff "Polyethylenterephthalat" bzw. "PET" verwendet wird, ist darunter ein Kondensationsprodukt von Terephthalsäure oder von deren Derivaten mit einem bifunktionellen Reagenz, das mindestens zwei Hydroxylgruppen für die Kondensationsreaktion enthält (Diol), zu verstehen. Für die Herstellung von sogenanntem Standard-Polyethylenterephthalat (Standard-PET) wird Terephthalsäure oder ein Derivat davon mit Ethylenglykol umgesetzt. Dieses Polymer benötigt für das Laminieren eine Temperatur von ca. 220°C. Für die Herstellung von sogenanntem PET-G (Glykol-modifiziertem PET) wird Terephthalsäure oder ein Derivat davon mit 1,4-Cyclohexandimethanol umgesetzt, das ebenfalls ein Diol ist. Dieses Polymer beginnt bei einer Temperatur von ca. 80°C zu erweichen (Erweichungstemperatur). Ferner sind auch Mischungen und/oder Copolymerisate dieser beiden Polymere möglich. Deren Erweichungstemperatur liegt zwischen den Erweichungstemperaturen von Standard-PET und PET-G und hängt vom Mischungsverhältnis beider Komponenten ab.

Soweit in dieser Beschreibung und in den Ansprüchen der Begriff "Polycarbonat" bzw. "PC" verwendet wird, ist darunter ein Kondensationsprodukt von Phosgen mit einem bifunktionellen Reagenz, das mindestens zwei Hydroxylgruppen für die Kondensationsreaktion enthält (Diol), zu verstehen. Das Diol kann insbesondere Bisphenol A sein. Das daraus hergestellte Polymer wird nachfolgend als Standard-PC bezeichnet. Dieses Polymer beginnt bei ca. 150°C zu erweichen (Erweichungstemperatur) und kann bereits bei ca. 165°C laminiert werden. Denkbar sind auch andere Polycarbonate, die mit anderen mehrwertigen Hydroxyverbindungen, insbesondere Diolen, erhältlich sind, beispielsweise mit Derivaten von Bisphenol A, etwa den beispielsweise in DE 10 2007 052 949 A1 angegebenen Bisphenol A-Derivaten.

Soweit in dieser Beschreibung und in den Ansprüchen der Begriff "Erweichungstemperatur" verwendet ist, ist darunter die mit der Vicat-Methode bestimmte Erweichungstemperatur nach DIN ISO 306 (Prüfkraft A, Heizrate 50 K/h) zu verstehen.

Soweit in dieser Beschreibung und in den Ansprüchen der Begriff "Folie" verwendet wird, ist darunter jegliches Flachmaterial zu verstehen, das in einer Laminiervorrichtung unter Beaufschlagung von Wärme und Druck zu einem Laminat verpresst werden kann, d.h. zu einem Halbzeug, das, ausgehend von mehreren Lagen, zu einem praktisch monolithischen Körper unlösbar oder nahezu unlösbar verschmolzen wird. Das Ausgangsmaterial ist ein Stapel aus mehreren Lagen der schmelzbaren Folien. Somit kann das Ausgangsmaterial ein Folienstapel sein, der aus zwei, drei, vier, fünf, sechs, sieben, acht, neun oder noch mehr einzelnen Folien besteht, die unterschiedliche Dicken haben können. Die Folien können vor dem Laminieren bereits punktuell miteinander verbunden (geheftet) sein, um zu gewährleisten, dass sich die Position der Folien beim Handhaben und Laminieren relativ zueinander nicht verändert. Ein aus den Folien gebildeter Stapel, entweder aus Einzelbögen oder einem Endlosband, jeweils bestehend aus mindestens zwei Lagen, kann im schließlich fertig laminierten Laminat einen Mehrfachnutzen darstellen, der mehrere Einzellaminate, beispielsweise mehrere zu Wert- und/oder Sicherheitsdokumenten weiterzuverarbeitende Einzelnutzen enthält. Letztere werden aus dem Mehrfachnutzen durch Vereinzeln, beispielsweise Ausstanzen oder Ausschneiden, herausgetrennt. Die Folien bestehen aus PET oder PC, sind opak, transluzent oder transparent und enthalten gegebenenfalls Füllstoffe, wie Verstärkungsmaterialien, und Additive, wie Lumineszenzstoffe, Laserinitiatoren, Pigmente, Farbstoffe oder dergleichen.

Die Lösung der vorstehend erläuterten Probleme besteht erfindungsgemäß darin, ein Verfahren zum flächigen Verbinden von mindestens zwei Polymerfolien mittels eines Laminierverfahrens zu schaffen, das folgende Verfahrensschritte umfasst: (a) Bereitstellen mindestens einer Polymerfolie eines ersten Typs und mindestens einer Polymerfolie eines zweiten Typs, wobei die mindestens eine Polymerfolie des ersten Typs im Wesentlichen aus einem Polyethylenterephthalat gebildet ist und wobei die mindestens eine Polymerfolie des zweiten Typs im Wesentlichen aus einem Polycarbonat gebildet ist; (b) Bilden eines Stapels der mindestens zwei Polymerfolien des ersten und des zweiten Typs, sodass mindestens eine Polymerfolie des ersten Typs und mindestens eine Polymerfolie des zweiten Typs unmittelbar aneinander anliegen; und (c) Verpressen des Stapels mit einem Pressdruck und bei einer Laminiertemperatur, bei der die mindestens zwei Polymerfolien erweichen und miteinander verbunden werden.

Mit diesem erfindungsgemäßen Verfahren wird ein erfindungsgemäßer Polymerfolienverbund aus mindestens zwei Polymerfolien geschaffen, wobei mindestens eine Polymerfolie des ersten Typs aus einem Polyethylenterephthalat und mindestens eine Polymerfolie des zweiten Typs aus einem Polycarbonat gebildet sind. Mindestens eine Polymerfolie des ersten Typs und mindestens eine Polymerfolie des zweiten Typs sind unmittelbar aneinander anliegend durch Laminieren miteinander verbunden.

Mit dem erfindungsgemäßen Polymerfolienverbund kann beispielsweise und erfindungsgemäß bevorzugt ein ebenfalls erfindungsgemäßes Wert- und/oder Sicherheitsdokument gebildet werden. Demgemäß kann der erfindungsgemäße Polymerfolienverbund vorteilhaft zur Herstellung des Wert- und/oder Sicherheitsdokuments eingesetzt werden.

Mit der Verbindung mindestens einer Polymerfolie des ersten Typs (PET-Folie) und mindestens einer Polymerfolie des zweiten Typs (PC-Folie) wird ein optimaler Aufbau von Laminaten zum Zwecke der Herstellung von Sicherheits- und/oder Wertdokumenten ermöglicht:

Zum einen können PC-Folien, beispielsweise Standard-PC-Folien, in dem Laminat verwendet werden, sodass eine nachträgliche Personalisierung von Rohdokumenten durch Schwärzung von in den PC-Folien enthaltenen Additiven (Laserinitiatoren) mittels Laserbestrahlung vorgenommen werden kann. Dies ermöglicht eine Weiterverarbeitung der Rohdokumente beispielsweise zu Personalausweisen, Passdokumenten, Führerscheinen und dergleichen direkt bei den für deren Ausgabe zuständigen Stellen, beispielsweise Behörden. Hierzu gehen diese Stellen von den nicht personalisierten Rohdokumenten aus und bringen die Personalisierungsdaten vor Ort in die Rohdokumente ein. Ferner bietet das erfindungsgemäße Verfahren den Vorteil, dass das Dokument durch zusätzliche Verwendung von PET kostengünstig und mit der erforderlichen hohen Kratzfestigkeit und erhöhten Spannungsrissbeständigkeit, d.h. mit verbesserten Gebrauchseigenschaften, hergestellt werden kann, indem nämlich PET-Folien als Overlayfolien (außen liegende Polymerfolien) verwendet werden. Dadurch dass die Polymerfolien darüber hinaus unterschiedliche Erweichungstemperaturen aufweisen, kann der Aufbau für eine Integration von elektronischen Bauelementen außerdem besonders günstig gestaltet werden, weil der beim Laminieren auf diese Bauelemente ausgeübte Pressdruck beim Laminieren durch bei niedriger Temperatur erweichende Polymerfolien gleichmäßig über die Bauelementflächen und deren Umgebung verteilt werden kann. Dadurch werden diese vor einer Schädigung bewahrt. Dies geschieht dadurch, dass die bei niedriger Temperatur erweichenden Polymerfolien in unmittelbarem Kontakt mit den Bauelementen im Stapel angeordnet werden und bei deren Erweichen allfällige Hohlräume im Bereich der Bauelemente durch das schmelzflüssige Folienmaterial ausgefüllt werden. Somit kann ein von außen eingebrachter Pressdruck über das geschmolzene Material auf die Bauelemente gleichmäßig verteilt werden.

Ein weiterer Vorteil der vorliegenden Erfindung besteht ferner darin, dass die Polymerfolien durch Laminieren miteinander verbunden werden. Eine derartige Verbindung von PET und PC miteinander galt insbesondere aus rheologischer Sicht bisher als technisch nicht praktikabel. Standard- PET bzw. PET-G einerseits und Standard-PC andererseits haben sehr unterschiedliche Erweichungstemperaturen, sodass das niedriger schmelzende Material (Standard-PC in einer Standard-PET/Standard-PC-Kombination und PET-G in einer PET-G/Standard-PC-Kombination) beim Laminieren stark verfließen würde und eine Lamination daher erheblich erschwert wäre. Zumindest breite Randbereiche der Laminate sind in diesem Falle nicht verwertbar. Überlegungen in diese Richtung zur technischen Realisierung wurden aus diesem Grund bislang nicht angestellt. Allenfalls andere Verbindungstechniken als das Laminieren hätten in Betracht gezogen werden können, beispielsweise das Kleben oder Verbinden mittels Klebstoffen oder Haftvermittlern. Allerdings kann bei einem Polymerfolienverbund aus miteinander verklebten Folien keine Gewähr dafür übernommen werden, dass das Dokument von einem Fälscher nicht leicht delaminiert und gefälscht oder manipuliert werden kann. Außerdem würde eine derartige Vorgehensweise die Herstellkosten des Folienverbundes erheblich erhöhen. Einen Kleber oder Haftvermittler zu finden, der die erforderlichen Eigenschaften im Hinblick auf mechanische Festigkeit, hohe Transparenz im sichtbaren, UV- und IR-Spektralbereich sowie Widerstandsfähigkeit in den erforderlichen Klimatests aufweisen würde, wäre zudem außerordentlich schwierig, wenn nicht unmöglich gewesen. Von daher kam auch diese Verbindungstechnik für die Herstellung eines Polymerfolienverbundes für Wert- und/oder Sicherheitsdokumente nicht in Betracht. Erst durch ein Laminationsverfahren wird eine sichere Verbindung zwischen den einzelnen Laminatfolien erreicht, weil damit ein monolithischer Verbund erreichbar ist (ein Laminat ist dadurch gekennzeichnet, dass nach dem Laminieren keine Grenzfläche zwischen den Folien mehr erkennbar ist, da die Folien vollständig miteinander verschmolzen sind). Ein optimaler Aufbau kann beispielsweise einen Grundkörper aus PC und Außenlagen aus PET enthalten.

PET-Folien zeichnen sich durch vergleichsweise geringe Herstellkosten, ferner eine hohe Kratzfestigkeit, eine hohe Spannungsrissbeständigkeit und eine äußerst gute Bedruckbarkeit aus.

PC weist eine sehr gute Beschreibbarkeit mittels Laserbestrahlung, wenn das Material mit geeigneten Additiven dotiert ist, eine sehr gute Temperaturbeständigkeit sowie eine sehr hohe Materialtransparenz auf. Des Weiteren ist PC als Material für hochsichere Dokumente durchgesetzt und wird oftmals entsprechend gefordert.

Die mindestens eine Polymerfolie des ersten Typs weist eine erste Erweichungstemperatur und die mindestens eine Polymerfolie des zweiten Typs eine zweite Erweichungstemperatur auf, wobei die Erweichungstemperaturen der Polymerfolien des ersten Typs und des zweiten Typs in einer bevorzugten Weiterbildung der vorliegenden Erfindung unterschiedlich sind.

Die mindestens zwei Polymerfolien des ersten Typs und des zweiten Typs werden mittels Lamination direkt miteinander verbunden, d.h. sie werden zu einem Stapel zusammengetragen, sodass sie flächig aufeinander liegen, vorzugsweise ohne dass weitere Materialien zwischen einer Polymerfolie des ersten Typs und einer Polymerfolie des zweiten Typs angeordnet werden. Dieser Stapel wird dann einem flächigen Pressverfahren unterworfen, wobei gleichzeitig Wärme in den Stapel eingeleitet wird, sodass die Polymerfolien erweichen und dabei verschweißt werden. Der Stapel wird hierzu zwischen Presswerkzeugen, beispielsweise Metallplatten, angeordnet und zwischen diesen eingespannt, vorzugsweise in einer horizontalen Lage, und der Druck wird über die Metallplatten auf den Stapel übertragen. Wärme wird üblicherweise über die Presswerkzeuge in den Stapel eingespeist. Derartige Chargen-Prozesse und die hierfür verwendeten Pressvorrichtungen sind bekannt. Alternativ können auch kontinuierliche Anlagen eingesetzt werden, in denen die Stapel in horizontaler Richtung fortbewegt und intermittierend zwischen Presswerkzeugen dem Pressdruck und der Erwärmung auf eine Temperatur oberhalb der Erweichungstemperatur unterworfen werden. Nach Abschluss einer Heizphase, in der die Lamination unter Bildung der monolithischen Verbindung zwischen den aneinander anliegenden Polymerfolien des ersten und des zweiten Typs fertiggestellt wird, wird der Stapel wieder abgekühlt, wobei die Polymere in dem Laminat erstarren und dabei den gewünschten stoffschlüssigen festen Verbund bilden. Vorzugsweise wird der Pressdruck auch während der Abkühlphase noch aufrecht erhalten.

Während des Laminiervorganges werden die Folienstapel zwischen den Presswerkzeugen vorzugsweise einem Pressdruck senkrecht zu den Oberflächen des Laminiergutstapels unterworfen. Dieser Pressdruck soll möglichst so groß sein, dass Luft, die sich eventuell zwischen den Folienlagen befindet, beim Erweichen der Lagen herausgepresst wird. Die Entfernung von Luft kann zudem durch Anwendung von Vakuum begünstigt werden. Der durch die Laminierpresse angewendete Pressdruck kann vorzugsweise in einem Bereich von 25 bis 250 N/cm$^2$, besonders bevorzugt in einem Bereich von 50 bis 100 N/cm$^2$, liegen. Der Pressdruck kann aber auch deutlich niedriger liegen, beispielsweise ab mindestens 1 N/cm$^2$, vorzugsweise ab mindestens 5 N/cm$^2$, besonders bevorzugt ab mindestens 15 N/cm$^2$. Diese Pressdruckwerte können von den Druckwerten abweichen, denen die Folien im Stapel unterworfen sind, da diese zusätzlich einem erhöhten Druck ausgesetzt sind, der durch das Gewicht von darüber liegendem Material (Folienstapel, Pressplatten und dergleichen) verursacht wird. Die Abweichung des an den jeweiligen Folien anliegenden Druckes von dem Pressdruck, der nominal von der Presse aufgewendet wird, hängt von der Position der jeweiligen Folie im Stapel und beispielsweise auch davon ab, ob eine Einetagenpresse oder eine Mehretagenpresse verwendet wird. Bei letzterer wird der Druck in den einzelnen Pressetagen vergleichmäßigt.

Die Temperatur, auf die die Folienstapel für die Lamination aufgeheizt werden, richtet sich nach der Art der verwendeten Materialien im Stapel. Die Temperatur ist im Allgemeinen so zu wählen, dass sie oberhalb der Erweichungstemperatur des Materials mit der höchsten Erweichungstemperatur liegt. Bei Materialkombinationen von Standard-PC mit Standard-PET kann die Laminiertemperatur vorzugsweise oberhalb von 220°C, typischerweise aber nicht höher als 250°C liegen. Bei Materialkombinationen von PET-G mit Standard-PC kann die Laminiertemperatur vorzugsweise oberhalb von 150°C, typischerweise aber nicht höher als 200°C, weiter bevorzugt im Bereich von 160°C bis 190°C, liegen. Grundsätzlich ist auch eine Temperatur außerhalb der angegebenen Bereiche, insbesondere eine noch höhere Temperatur denkbar, wobei aber die Prozessparameter im Übrigen, insbesondere die Prozesszeit, angepasst werden müssen. Zur sorgfältigen Einbettung von elektronischen Bauelementen in den Polymerfolienverbund kann der Laminiervorgang außerdem unter Vakuumbedingungen durchgeführt werden. Dadurch werden etwaige Hohlräume, in denen sich Luft befinden kann, beseitigt. Die Prozesszeit kann beispielsweise je nach Art der Maschine und Anordnung 30 sec bis 60 min betragen. Nach dem Verpressen bei der Laminiertemperatur werden die Folienstapel wieder abgekühlt, vorzugsweise auf Raumtemperatur. Beim Abkühlen kann ebenfalls ein Druck auf den Folienstapel ausgeübt werden. Der Druck kann gleich zu oder verschieden sein von dem während des Heizens angewendeten Druck. Vorzugsweise liegen die beiden Drücke in der gleichen Größenordnung.

Eine zu hohe Laminiertemperatur und/oder ein zu hoher Pressdruck würden bewirken, dass die Materialien der Polymerfolien zu sehr verfließen bzw. verquetscht werden, sodass die erhaltenen Produkte unbrauchbar werden. In der Praxis lässt sich ein leichtes Verfließen des Materials im Randbereich der Polymerfolien nur schwer vermeiden. Besonders wenn sich Druckbilder auf den Polymerfolien befinden, wird jedes Fließen sofort erkennbar. Aus diesem Grunde werden die Laminate stets im Übermaß gefertigt. Beschädigte Randbereiche werden nach dem Laminieren entfernt.

Um die vorstehenden Probleme zu überwinden, wird der Pressdruck daher in einer weiteren bevorzugten Weiterbildung der vorliegenden Erfindung möglichst niedrig gewählt. Durch die unterschiedlichen Erweichungstemperaturen der Polymerfolien des ersten und des zweiten Typs im Polymerfolienstapel erweichen die bei niedrigerer Temperatur schmelzenden Folien, beispielsweise aus Standard-PC gebildete Polymerfolien in einem Stapel von Standard-PC- und Standard-PET-Folien, bevor die höher schmelzenden Polymerfolien, nämlich in diesem Beispiel die Standard-PET-Folien, weich werden. In diesem Falle ist eine Laminiertemperatur von ca. 220°C erforderlich. Alternativ erweichen aus PET-G gebildete Folien in einem aus PET-G- und Standard-PC-Folien gebildeten Stapel, bevor die Standard-PC-Folien anschmelzen. In diesem Falle ist eine Laminiertemperatur zu wählen, bei der üblicherweise Standard-PC-Folien miteinander laminiert werden. Dieses Verhalten würde bei Aufwendung eines normalen Pressdruckes (beispielsweise > 20 N/cm$^2$) dazu führen, dass die bei niedrigerer Temperatur weich werdende Polymerfolie zumindest in deren Randbereich aus dem Stapel in erheblichem Umfange herausgedrückt wird, sobald diese weich geworden ist, die bei höherer Temperatur erweichende Polymerfolie dagegen noch nicht, sodass ein relativ breiter Randbereich als ungenutzte Fläche reserviert werden müsste.

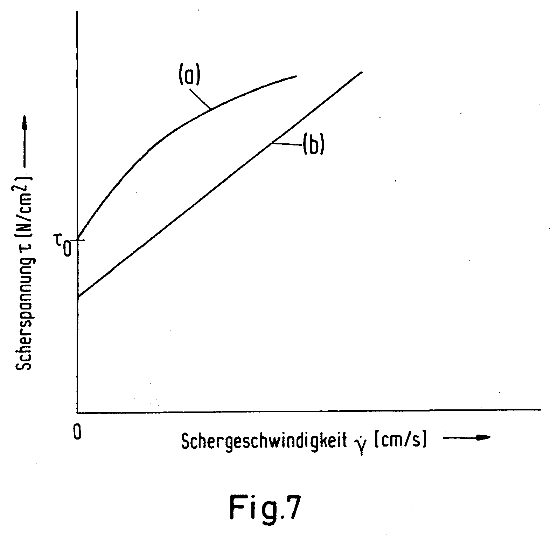

Um diesen nachteiligen Effekt zu mindern oder sogar vollständig aufzuheben, wird weiter erfindungsgemäß vorgeschlagen, die mindestens zwei Polymerfolien des ersten und des zweiten Typs beim Verpressen Laminierbedingungen zu unterwerfen, unter denen die Polymerfolien einem Druck von < 8 N/cm$^2$ und vorzugsweise > 2 N/cm$^2$, weiter bevorzugt < 5 N/cm$^2$, unterworfen sind. Das bedeutet, dass der Druck, unter dem die Polymerfolien beim Laminieren stehen, den angegebenen Wert hat, und zwar innerhalb des Stapels. Dieser Druck kann größer sein als der durch eine Laminierpresse von außen in den Stapel eingebrachte Pressdruck, weil der Druck, dem die Polymerfolien unmittelbar unterworfen sind, beispielsweise unter zusätzlicher Berücksichtigung des Gewichtes des über den Polymerfolien liegenden Stapelteils sowie der Pressplatten und dergleichen, erhöht ist. Es hat sich herausgestellt, dass die Polymerfolien sowohl des ersten Typs als auch des zweiten Typs bei derartig geringem Pressdruck praktisch nicht fließen, selbst wenn die Laminiertemperatur über der Erweichungstemperatur der Polymerfolien liegt, sodass die Polymerfolien unter diesen Bedingungen schmelzflüssig sind. Denn die Polymere dieser Folien verhalten sich wie nichtnewtonsche Flüssigkeiten (Fluide). Die Folien verhalten sich im schmelzflüssigen Zustand als Cassonplastische (viskoplastische) Fluide, d.h. die Polymere beginnen unter diesen Bedingungen erst bei einer erhöhten Schubspannung zu fließen und zeigen dann eine nichtlineare Schubspannungs-/Schergeschwindigkeits-Abhängigkeit. Ähnliche Abhängigkeiten sind bei Bingham-Fluiden zu beobachten. In diesem Falle ändert sich die Scherspannung mit der Schergeschwindigkeit linear, während die Scherspannung im Falle der Casson-plastischen Fluide mit ansteigender Schergeschwindigkeit mit der Quadratwurzel zunimmt. Derartige Abhängigkeiten sind qualitativ in Fig. 7 gezeigt. Im Falle der Casson-plastischen Fluide wird die Abhängigkeit der Scherspannung zur Schergeschwindigkeit durch die Casson-Gleichung beschrieben:

$$(\tau^{1/2} - \tau_0^{1/2}) = A\dot{\gamma}^{1/2}$$

$\tau$: Scherspannung
$\dot{\gamma}$: Schergeschwindigkeit
$A$, $\tau_0$: stoffspezifische Konstanten

(Scott Blair, "The Success of Casson's Equation", Rheologica Acta, Seiten 184 ff, Band 5, Heft 3, 1966)
Das bedeutet, dass die Polymerfolien im schmelzflüssigen Zustand selbst unter geringer Druckbeaufschlagung (entsprechend der anliegenden Scherspannung [N/cm$^2$]) nicht zu fließen beginnen und dass sich auch im Randbereich der Polymerfolien daher praktisch keine durch Fließen erzeugten Schädigungen einstellen. Dies ist darauf zurückzuführen, dass die Polymerfolien, einschließlich derjenigen mit der niedrigeren Erweichungstemperatur, unter der angewendeten Druckbelastung weitgehend ihre ursprüngliche Form beibehalten. Somit ist der Pressdruck, dem die Polymerfolien beim Laminieren ausgesetzt wird, vorzugsweise kleiner als die Schubspannung einzustellen, bei der die Schergeschwindigkeit gerade noch Null ist oder nahe Null beträgt. Eine geringfügige Überschreitung des Wertes der Scherspannung $\tau_0$, bei der die Schergeschwindigkeit gerade noch Null ist, beispielsweise um bis zu 10 N/cm$^2$, weiter vorzugsweise um bis zu 8 N/cm$^2$, noch weiter vorzgusweise um bis zu 5 N/cm$^2$ und am meisten bevorzugt um bis zu 2 N/cm$^2$, ist ebenfalls möglich, ohne beim Laminieren wesentliche Nachteile bezüglich des Fließens des Polymers am Rande des Laminatstapels in Kauf nehmen zu müssen. Jedoch ist eine Einhaltung der Bedingungen, bei denen die Schergeschwindigkeit gerade noch Null ist, vorzuziehen. Zur weiteren Minimierung des Ausschusses infolge des Fließens des Polymers dienen die nachfolgend beschriebenen bevorzugten Ausführungsformen der vorliegenden Erfindung.
Um die vorstehenden Probleme weiter zu lösen, hat es sich als generell günstig herausgestellt, die zu laminierende Fläche im Vergleich zur Dicke des Laminates möglichst groß zu wählen. Dadurch wird die schädliche Wirkung des Materialflusses beim Laminieren verringert, da die Breite des nicht verwendbaren Randbereiches des Laminats relativ reduziert wird.
In einer weiteren bevorzugten Weiterbildung der vorliegenden Erfindung kann daher der Quotient R* der Länge der kürzesten Flächendiagonale einer einzelnen der mindestens einen Polymerfolie des ersten Typs oder des zweiten Typs mit der niedrigeren Erweichungstemperatur zu deren Dicke in einem Bereich oberhalb eines Grenzquotienten R*$_{lim}$ von 100, d.h. R* = p$_{min}$/d > R*$_{lim}$ = 100, wobei p$_{min}$ die Länge der kürzesten Flächendiagonale der Polymerfolie und d deren Dicke sind, vorteilhaft gewählt werden. Falls mehrere Polymerfolien mit der niedrigen Erweichungstemperatur in dem Stapel unmittelbar aneinander anliegen, wird die Dicke des Stapels dieser aneinander anliegenden Polymerfolien zugrunde gelegt.
In einer alternativen bevorzugten Ausführungsform dieser Weiterbildung liegt der Quotient R** der Flächengröße einer einzelnen der mindestens einen Polymerfolie des ersten Typs oder des zweiten Typs mit der niedrigeren Erweichungstemperatur zu deren Dicke in einem Bereich oberhalb eines Grenzquotienten R**$_{lim}$ von 7850 mm, d.h. R** = A/d > R**$_{lim}$ = 7850, wobei A die Fläche der Polymerfolie und d deren Dicke sind. Falls mehrere Polymerfolien mit der niedrigen Erweichungstemperatur in dem Stapel unmittelbar aneinander anliegen, wird die Dicke des Stapels dieser aneinander anliegenden Polymerfolien zugrunde gelegt.
Für die vorstehenden Bedingungen gilt, dass beispielsweise Standard-PC-Folien in einem Standard-PC- und Standard-PET-Folien enthaltenden Stapel als bei niedrigerer Temperatur erweichende Polymerfolien zugrunde zu legen sind, da diese Folien beim Laminieren erweichen, bevor die Standard-PET-Folien anfangen zu schmelzen. Umgekehrt gilt, dass PET-G-Folien in einem PET-G- und Standard-PC-Folien enthaltenden Stapel erweichen, bevor die Standard-PC-Folien erweichen.

Je höher die vorgenannten Werte für R* und R** gewählt werden, desto mehr Freiheitsgrade ergeben sich hinsichtlich der Druck- und Temperaturführung in Verbindung mit der dazu gehörenden Prozesszeit beim Laminieren.

Durch Einhalten der vorstehenden Bedingungen kann der Anteil der niedriger schmelzenden Polymerfolie, der beim Laminiervorgang randseitig geschädigt wird, minimiert werden, sodass nur ein geringer Anteil der Polymerfolie verworfen werden muss und ein maximaler Anteil für die Herstellung beispielsweise von Dokumentennutzen eingesetzt werden kann (Nutzfläche: Gesamtfläche des Polymerfolienverbundes abzüglich der nicht verwendbaren Randbereiche). Dies gelingt beispielweise durch eine Vergrößerung der Fläche der Polymerfolien, die zu dem Laminat verpresst werden sollen. Beispielsweise kann ein Laminat mehrere Nutzen enthalten (Mehrfachnutzen), die nach dem Laminiervorgang durch Ausschneiden, Stanzen oder ein anderes Vereinzelungsverfahren voneinander getrennt werden. Eine Minimierung der Fläche des zu verwerfenden Randes im Verhältnis zur Gesamtfläche des Polymerfolienverbundes wird dadurch erreicht, dass das Format der Polymerfolien einem Quadrat angenähert wird.

In einer weiteren bevorzugten Weiterbildung der vorliegenden Erfindung weist der erfindungsgemäße Polymerfolienverbund eine Trägerfolie, auf der sich mindestens ein elektronisches Bauelement befindet, und eine Ausgleichsfolie auf, die an einer das mindestens eine elektronische Bauelement aufweisenden Seite der Trägerfolie mit dieser verbunden ist. Die Trägerfolie mit dem mindestens einen elektronischen Bauelement und die Ausgleichsfolie befinden sich vorzugsweise innerhalb des Stapels. Die Ausgleichsfolie ist vorzugsweise eine Polymerfolie mit einer Erweichungstemperatur, die niedriger ist als die Erweichungstemperatur der Trägerfolie. Die Ausgleichsfolie weist jeweils eine passend konturierte Aussparung für das mindestens eine elektronische Bauelement auf und ist vorzugsweise genauso oder ungefähr so dick wie das mindestens eine elektronische Bauelement zuzüglich der Bauhöhe gegebenenfalls vorhandener elektrischer Anschlüsse des Bauelements auf der Trägerfolie. Nach dem Zusammentragen der Trägerfolie mit dem darauf befindlichen mindestens einen elektronischen Bauelement und der Ausgleichsfolie, füllt das mindestens eine elektronische Bauelement die Aussparungen weitgehend lückenlos aus. Als elektronische Bauelemente kommen insbesondere RFID-Bauteile, bestehend aus einer Antenne und einem RFID-Chip-Modul, sowie andere integrierte Halbleiterelemente als RFID-ICs, optische Displays, drucksensitive Schalter und dergleichen in Betracht. Diese elektronischen Bauelemente werden üblicherweise zunächst separat auf der Trägerfolie montiert, beispielsweise durch Direktmontage (ohne zusätzlichen Träger in Form eines Moduls) oder in Form eines Moduls, und das erhaltene Bauteil als sogenanntes Inlay zusammen mit den anderen Polymerfolien laminiert. Die Trägerfolie kann eine Polymerfolie des ersten oder zweiten Typs sein. Die Ausgleichsfolie kann ebenfalls eine Polymerfolie des ersten oder zweiten Typs sein.

Mit diesem Aufbau werden die Probleme beim Laminieren gelöst, die typischerweise bei der Integration derartiger elektronischer Bauelemente in Wert- und/oder Sicherheitsdokumente auftreten: Teilweise sind die elektronischen Bauelemente gegenüber mechanischen Belastungen und Verformungen der Trägerfolie relativ empfindlich. Wenn beispielsweise die Folien beim Laminieren nur in sehr geringem Umfange verfließen, können gedruckte Antennen bereits leicht reißen, oder der RFID-Chip kann die Antenne beispielsweise mit seinen Außenkanten beim Laminieren abquetschen. Um diese Risiken zu verringern, werden auf die Trägerfolien die Ausgleichsfolien aufgelegt, die bisher aus demselben Material bestanden wie die Trägerfolien. Mittels der Freistellung, beispielsweise Ausstanzungen, in der Ausgleichsfolie wird versucht, möglichst nahe an die Kontur der elektronischen Bauelemente, beispielsweise eines Chips, heranzukommen, sodass möglichst wenig Leerraum zwischen dem elektronischen Bauelement und der Ausgleichsfolie entsteht. Im Allgemeinen verbleiben jedoch immer zumindest geringe Leerräume zwischen der Ausgleichsfolie und dem elektronischen Bauelement, sodass sich ein erhöhter Ausschuss bei der Produktion ergibt. Bisher wurden diese Leerräume mittels Klebstoffen verfüllt. Dies ist jedoch aufwändig.

Die vorliegende Erfindung liefert nun eine elegante Möglichkeit, diese umständlichen Verfahren und Probleme bei der Herstellung zu überwinden, indem eine Ausgleichsfolie aus einem Material mit geringerer Erweichungstemperatur als die Erweichungstemperatur der Trägerfolie gewählt wird. Beispielsweise können die Trägerfolie aus Standard-PC und die Ausgleichsfolie aus PET-G gebildet sein. Bei dieser Materialkombination verfließt das PET-G der Ausgleichsfolie beim Laminieren und der damit verbundenen Erwärmung bereits bei einer Temperatur, bei welcher die Standard-PC-Folie noch ihre Form beibehält. Die elektronischen Bauelemente sind dadurch bereits optimal geschützt, weil sie in das schmelzflüssige PET-G eingebettet werden, das die Bauelemente umfließt, bis der weitere Anstieg der Temperatur den Bereich für das Laminieren der PC-Folien erreicht. Entsprechendes gilt auch für eine Materialkombination von Standard-PC mit Standard-PET, wobei die Trägerfolie aus Standard-PET und die Ausgleichsfolie aus Standard-PC gebildet sind. Indem beim Laminieren zunächst die Ausgleichsfolie erweicht und erst dann die Trägerfolie, werden nicht nur die Anschlusskontakte geschont; vielmehr bleiben auch die elektrischen Strukturen auf der Trägerfolie erhalten, sodass insgesamt eine erhöhte Ausbeute bei der Herstellung erreicht wird.

In einer weiteren bevorzugten Ausführungsform der vorliegenden Erfindung ist die mindestens eine Polymerfolie des ersten Typs im Wesentlichen aus einem Gemisch von Standard-PET und PET-G gebildet. Vorzugsweise ist die Erweichungstemperatur dieses Gemisches ungefähr genauso groß wie die Erweichungstemperatur der mindestens einen Polymerfolie des zweiten Typs (aus Standard-PC oder einem anderen PC), d.h. die Erweichungstemperatur der mindestens einen Polymerfolie des ersten Typs liegt in einem Bereich von ± 30°C, vorzugsweise in einem Bereich von ±20°C, noch weiter bevorzugt in einem Bereich von ± 10°C und am meisten bevorzugt in einem Bereich von ± 5°C, der Erweichungstemperatur der Polymerfolie des zweiten Typs.

Zur Herstellung einer Polymerfolie aus einem Gemisch von Standard-PET und PET-G können diese beiden Materialien beispielsweise in einem Extrusionsverfahren in einem abgestimmten Mischungsverhältnis vorzugsweise homogen miteinander vermischt und zu der Polymerfolie extrudiert werden. Je nach Mischungsverhältnis lassen sich beliebige Werkstoffeigenschaften einstellen, die zwischen denen der reinen Materialien liegen. Insbesondere die Erweichungstemperatur der Mischung liegt zwischen denjenigen der reinen Materialien. Auf diese Weise lässt sich das Mischungsverhältnis optimal an das Laminierverhalten von PC anpassen. Damit kann erreicht werden, dass eine möglicherweise nötige Optimierung der Quotienten R* oder R** für die niedriger schmelzenden Polymerfolien obsolet wird. Denn mit einem optimierten Mischungsverhältnis von PET zu PET-G wird eine ideale Anpassung an das Laminierverhalten von PC erzielt.

Der mit dem erfindungsgemäßen Verfahren hergestellte erfindungsgemäße Polymerfolienverbund wird vorzugsweise zur Produktion von Wert- und/oder Sicherheitsdokumenten eingesetzt, insbesondere von ID-Karten, vor allem im ID 1-Format. Außerdem kann der erfindungsgemäße Polymerfolienverbund auch zur Produktion von Datenträgerkarten als Bestandteil von Passdokumenten (Passbüchern) eingesetzt werden. Grundsätzlich denkbar ist auch die Herstellung von Visitenkarten, Werbekarten und Folienbahnen als Halbfertigprodukt sowie von daraus hergestellten Produkten, die aus einem flächigen Verbund von PET- und PC-Folien gebildet sind.

Die Polymerfolien des zweiten Typs können in einer weiteren bevorzugten Weiterbildung der vorliegenden Erfindung einen Grundkörper eines Polymerfolienverbundes, insbesondere zur Produktion eines Wert- und/oder Sicherheitsdokuments, bilden. Der Polymerfolienverbund weist in diesem Falle zusätzlich vorteilhafterweise außerdem an beiden Außenseiten jeweils mindestens eine Polymerfolie des ersten Typs auf. Dieser Aufbau verleiht dem Verbund die erforderliche Kratzfestigkeit und Spannungsrissbeständigkeit.

Zur näheren Erläuterung der vorliegenden Erfindung dienen die nachfolgend beschriebenen Figuren, die die Erfindung lediglich exemplarisch wiedergeben:

Fig. 1    zeigt einen Polymerfolienverbund in einer ersten Ausführungsform der vorliegenden Erfindung in einer Querschnittsdarstellung;

Fig. 2    zeigt einen Polymerfolienverbund in einer zweiten Ausführungsform der vorliegenden Erfindung in einer Querschnittsdarstellung;

Fig. 3    zeigt eine schematische Draufsicht auf ein Inlay mit einem RFID-Bauteil;

Fig. 4    zeigt einen Schnitt durch einen Verbund des Inlays von Fig. 3 mit einer Ausgleichsfolie;

Fig. 5    zeigt einen Schnitt durch einen Polymerfolienverbund mit dem Verbund von Fig. 4 mit dem RFID-Inlay und der Ausgleichsfolie;

Fig. 6    zeigt ein Wert- und/oder Sicherheitsdokument in Form einer ID-Karte mit einem innenliegenden RFID-Bauteil in einer perspektivischen Ansicht;

Fig. 7    zeigt schematisch die Abhängigkeit der Scherspannung von der Schergeschwindigkeit bei nichtnewtonschen Fluiden; (a) Casson-plastische Fluide; (b) Bingham-Fluide.

In der nachfolgenden Beschreibung, den Ansprüchen und den Figuren bezeichnen gleiche Bezugszeichen Elemente mit derselben Funktion.

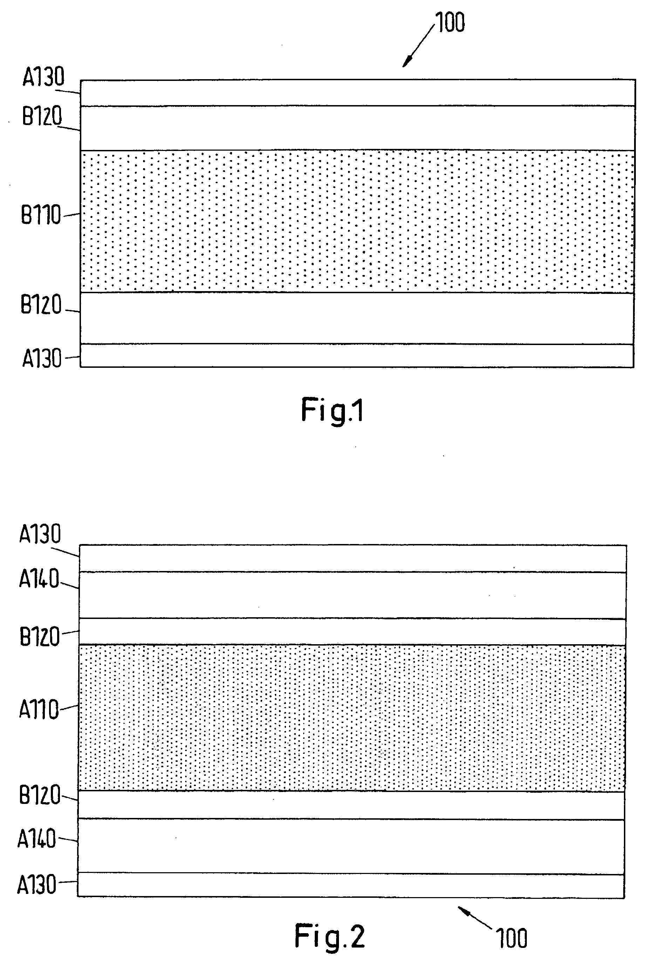

Fig. 1 zeigt einen Polymerfolienverbund 100 gemäß der vorliegenden Erfindung aus einem Grundkörper B110, der aus Standard-PC gebildet ist, daran anliegenden laserfähigen Folien B120, ebenfalls aus Standard-PC, sowie außen liegenden Overlayfolien A130 aus Standard-PET.

Die beiden Overlayfolien A130 sind transparent, sodass der darunter liegende Kartenkörper aus dem opaken Grundkörper B110 und den transparenten laserfähigen Polymerfolien B120 sichtbar bleibt. Indem die Folien A130 aus Standard-PET gebildet sind, gewährleisten sie eine sehr gute Kratzfestigkeit und hohe Spannungsrissbeständigkeit. Dies garantiert beste Gebrauchseigenschaften des Polymerfolienverbundes 100.

Der Grundkörper B110 besteht aus Standard-PC und ist opak, beispielsweise weiß, indem er mit einem weißen Pigment, beispielsweise Titandioxid, gefüllt ist. Dadurch ist der entstehende Polymerfolienverbund 100 nicht durchscheinend.

Zwischen dem Grundkörper B110 und den Overlayfolien A130 befinden sich die weiteren transparenten Polymerfolien B120 aus Standard-PC, die bedruckbar und außerdem mit Additiven versehen sind. Diese Additive können beispielsweise Laserinitiatoren sein, die also bei Laserbestrahlung monochrom, insbesondere schwarz, einfärbbar sind. Die Bedruckbarkeit ermöglicht das Einbringen von Verifikationsmerkmalen, beispielsweise Guillochen oder eines Wappens, die eine Echtheitsprüfung eines aus dem Polymerfolienverbund 100 herstellbaren Wert- und/oder Sicherheitsdokuments erlaubt. Die Laserinitiatoren ermöglichen eine nachträgliche Individualisierung, insbesondere Personalisierung, des aus dem Polymerfolienverbund 100 hergestellten Rohdokuments, indem beispielsweise Personendaten, wie ein Gesichtsbild der Person, der das Dokument zugeordnet werden soll, in diese Folienlagen B120 nachträglich eingebracht werden. Auf diese Weise können nicht personalisierte Rohdokumente von Wert- und/oder Sicherheitsdokumente ausgebenden Stellen nachträglich personalisiert werden.

Für die Herstellung eines Stapels der Polymerfolien B110, B120, A130 werden diese zunächst zusammengetragen (gestapelt) und dann zwischen die Presswerkzeuge einer Laminierpresse gelegt. Die Polymerfolien haben ein möglichst großes Format, um den Randbereich relativ zu deren Fläche so klein wie möglich zu halten. Daher kann das Format rechteckig mit Seitenrändern von 55 mm x 85 mm sein. Das Verhältnis der Folienfläche zur Foliendicke aller PC-Folien, also der Grundkörper-Folie B110 und der laserfähigen Folien B120, in dem zu laminierenden Folienstapel sollte oberhalb eines Wertes von 7850 mm liegen, um den relativen Verlust durch den Randbereich zu minimieren. Das Format kann zur Herstellung mehrerer Nutzen beispielsweise von Wert- und/oder Sicherheitsdokumenten dienen, die nach dem Laminieren aus dem fertigen Folienverbund 100 beispielsweise durch Ausstanzen vereinzelt werden.

Da der Grundkörper B110 und die beiden laserfähigen Polymerfolien B120 aus Standard-PC und die beiden äußeren Polymerfolien A130 aus Standard-PET gebildet sind, wird für die Lamination eine Laminiertemperatur gewählt, die bei ungefähr 220°C liegt, um auch das Standard-PET der Overlay-Folien A130 zumindest anschmelzen zu können. Bei dieser Temperatur erweicht Standard-PC, sodass es bereits ohne weiteres fließen kann. Um eine erhebliche Schädigung insbesondere der Randbereiche der PC-Folien B110, B120 zu vermeiden, wird vorzugsweise ein geringer Pressdruck angewendet, sodass der Druck, der auf die PC-Folien wirkt, kleiner als 8 N/cm$^2$, beispielsweise 5 N/cm$^2$, ist. Randbereiche mit etwaigen geringfügigen Verwaschungen, die durch ein leichtes Verfließen in diesem Bereich dennoch stattfinden sollten, werden nach dem Laminieren entfernt. Diese Bereiche können jedoch schmal gehalten werden. Der angegebene Druck und die Laminiertemperatur werden während einer Zeitspanne von etwa 2 min bei der Laminiertemperatur aufrechterhalten.

Nach dem Aufheizen auf die angegebene Laminiertemperatur und dem Halten der Temperatur während der Prozesszeit wird die Temperatur wieder auf Raumtemperatur abgesenkt, wobei das Folienmaterial wieder erstarrt. Es entsteht ein monolithischer Polymerfolienverbund 100.

Würde anstelle von Standard-PET für die Overlayfolien A130 PET-G verwendet, könnte die Laminiertemperatur auf die für Standard-PC angepasste Laminiertemperatur abgesenkt werden, beispielsweise auf 160°C bis 180°C. In diesem Falle ist der Laminierdruck ebenfalls so weit abzusenken, dass die PET-G-Folie A130 nicht zu sehr verfließt, vorzugsweise auf einen Wert an der Folie von < 8 N/cm$^2$. Da die Overlayfolien A130 relativ dünn sind, kann bei einem entsprechend großen Flächen-Dicken-Verhältnis (bezogen auf die Dicke jeder der PET-G-Folien), mit einem bei reinem PC üblichen Pressdruck und einer entsprechenden Laminiertemperatur gearbeitet werden.

In Fig. 2 ist eine weitere erfindungsgemäße Ausführungsform gezeigt, die einen Grundkörper A110 aus opakem, beispielsweise weißem, Standard-PET aufweist. Beidseitig zu dem Grundkörper A110 liegen an diesem jeweils eine dünne transparente Folie B120 aus Standard-PC an, die laserfähig ist, d.h. Laserinitiatoren enthält. Die aus diesen Folien B120 gebildeten Lagen im Polymerfolienverbund können nachträglich durch Laserbestrahlung stellenweise geschwärzt oder anderweitig gefärbt werden, um beispielsweise eine Personalisierung eines Dokuments vorzunehmen. An die laserfähigen PC-Folien B120 schließen sich beidseitig jeweils eine transparente bedruckbare Polymerfolie A140 aus Standard-PET an. Außen liegend ist schließlich jeweils eine Overlayfolie A130 aus transparentem Standard-PET angeordnet. Durch verminderte Verwendung von PC in diesem Verbund 100 werden erhebliche Kosteneinsparungen erzielt, wobei aber weiterhin der Vorteil der Laserfähigkeit des Polymerfolienverbundes bestehen bleibt.

Auch in diesem Falle ist für die Wahl des Formats der Polymerfolien A110, B120, A130, A140 vorteilhaft, möglichst große Folienbögen einzusetzen, um etwaige Randbeschädigungen relativ zur Restgröße der Folien so gering wie möglich zu halten. Ferner ist der Druck beim Laminieren vorzugsweise auf einen Wert von weniger als 8 N/cm$^2$ einzustellen, um ein Verfließen des Polymers mit der niedrigeren Erweichungstemperatur, hier Standard-PC, im Randbereich zu minimieren. Die Laminiertemperatur liegt beispielsweise in einem Bereich von ca. 220°C, um zu gewährleisten, dass zusätzlich zu PC auch das Material der PET-Folien zumindest anschmilzt, um einen monolithischen Verbund zu erzielen.

Falls anstelle von Standard-PET PET-G als Material für die PET-Folien, nämlich die Grundkörper-Folie A110, die bedruckten PET-Folien A140 und die Overlayfolien A130, verwendet wird, kann die Laminiertemperatur auf einen Wert von beispielsweise 160°C bis 180°C angepasst werden. In entsprechender Weise wird auch die Prozesszeit angepasst.

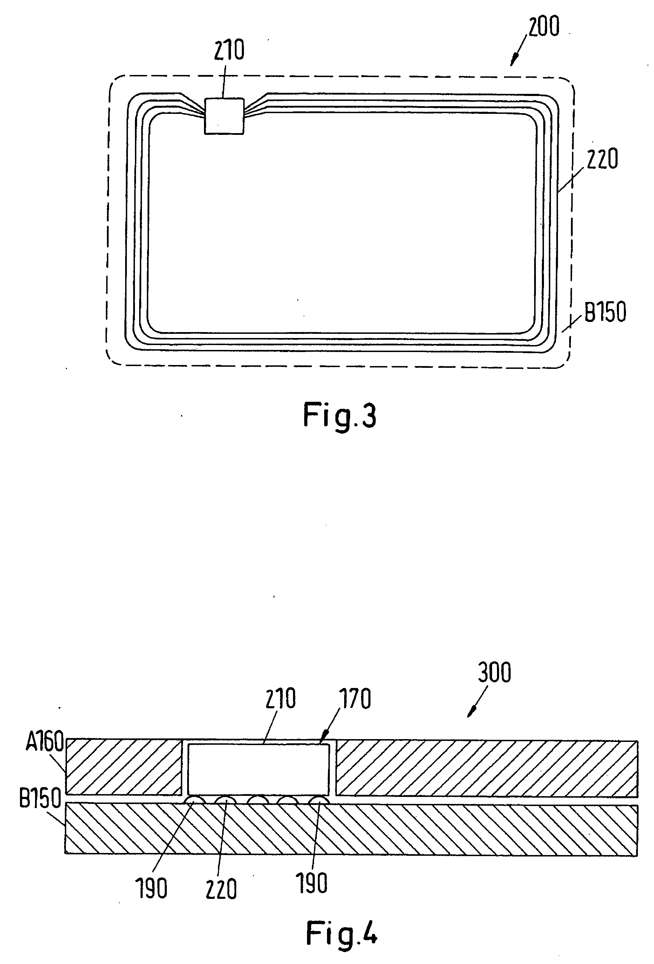

Um beispielsweise einen Polymerfolienverbund 100 herzustellen, der ein elektronisches Bauelement aufweist, beispielsweise das in Fig. 3 in der Draufsicht gezeigte RFID-Bauteil 200, bestehend aus einem RFID-Chip 210 und einer mit diesem elektrisch verbundenen Antenne 220, die beispielsweise durch Siebdrucken mit einer leifähigen Farbe in einer in einer Spirale verlaufenden Form hergestellt ist, werden eine beispielsweise opake Trägerfolie B150 aus einem höherschmelzenden Polymer und eine opake Ausgleichfolie A160 aus einem niedriger schmelzenden Material verwendet. Diese beiden Folien B150, A160 zusammen mit dem RFID-Chip 210 und der Antenne 220 sind in Fig. 4 im Schnitt gezeigt. Sie bilden gemeinsam eine Bauelement-Baugruppe 300. Die Ausgleichsfolie A160 weist eine Aussparung 170 auf, in die der RFID-Chip 210 hineinragt. Die Trägerfolie B150 kann beispielsweise aus Standard-PC gebildet sein und die Ausgleichsfolie A160 aus PET-G.

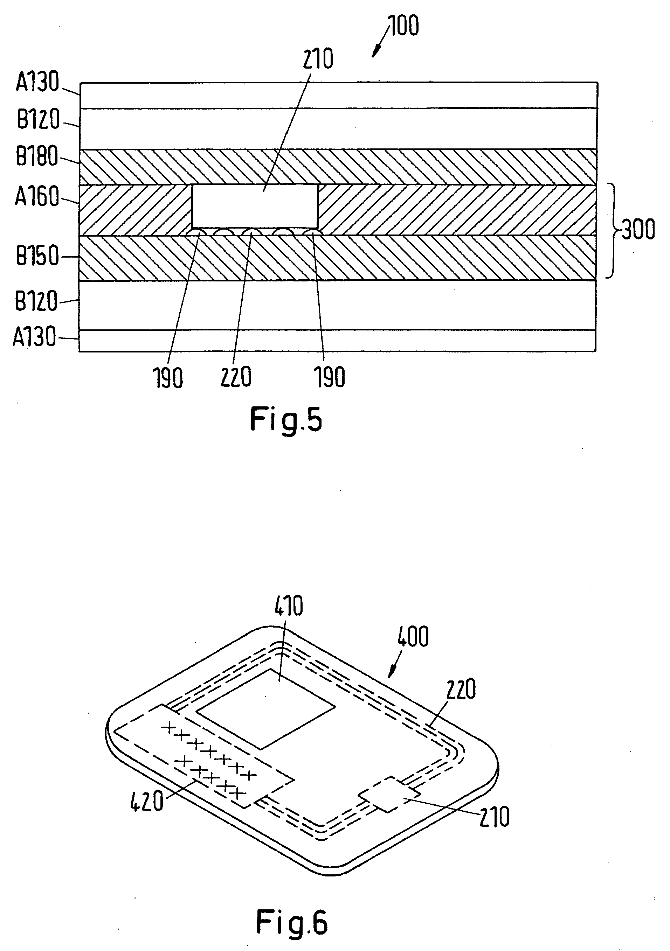

Zunächst wird das RFID-Bauteil 200 auf der Trägerfolie B150 hergestellt und dann mit der Ausgleichsfolie A160 sowie mit weiteren außen liegenden Folien B120, A130, B180 zusammengetragen (Fig. 5). Zur Herstellung des RFID-Bauteils 200 auf der Trägerfolie B150 wird zunächst die Antenne 220 in Form einer Spirale auf die Trägerfolie B150 mit einer Leitfarbe oder -paste, beispielsweise mit einer Silberleitpaste, gedruckt. Die Antenne 220 weist an ihren Ende Anschlussflächen 190 für den RFID-Chip 210 auf. Anschließend wird der RFID-Chip 210 in Flip-Chip-Technik mit seinen Kontakthöckern (Bumps) nach unten weisend auf die Anschlussflächen der Antenne 220 aufgesetzt und dort verklebt. Dieses Bauteil 200 auf der Trägerfolie B150 wird dann mit der Ausgleichsfolie A160 zusammengetragen, wobei der RFID-Chip 210 in die Aussparung 170 in der Ausgleichsfolie A160 hineinragt. Da die Ausgleichsfolie A160 eine Dicke hat, die ungefähr der Bauhöhe des RFID-Chips 210 auf der Trägerfolie B150 entspricht, schließt dessen Oberseite ungefähr mit der Oberfläche der Ausgleichsfolie A160 ab. In Fig. 4 sind auch die Anschlusskontakte 190 für den RFID-Chip 210 auf der Antenne sowie die Antenne 220 erkennbar.

Zu dieser Bauelement-Baugruppe 300 wird dann eine opake PC-Folie B180 auf der Seite der Baugruppe hinzugefügt, auf der sich die Ausgleichsfolie A160 befindet. Diese PC-Folie B180 und die Trägerfolie B150 sind opak und verhindern daher, dass das RFID-Bauteil 200 von außen sichtbar ist.

Anschließend werden noch beidseitig jeweils eine transparente laserfähige und bedruckte Folie B120 aus Standard-PC und beidseitig zu diesen jeweils eine transparente Polymerfolie A130 aus Standard-PET zugefügt. Dieser Aufbau ist in Fig. 5 gezeigt.

Hinsichtlich der Dimensionierung der Polymerfolien B120, A130, B150, A160, B180, die zur Bildung des Folienstapels verwendet werden, ist auf die vorstehenden Beispiele gemäß Fig. 1 und 2 zu verweisen. Der Stapel wird dann in eine Laminierpresse gebracht und dort mit einem Laminierdruck vorzugsweise von weniger als 8 N/cm$^2$ und einer Laminiertemperatur, die sich an dem Polymermaterial im Stapel orientiert, dessen Erweichungstemperatur höher ist als die der anderen Polymere, zu einem Laminat verpresst. Da Standard-PET und Standard-PC zur Herstellung des Laminats verwendet werden, ist die Laminiertemperatur auf einen Wert von ungefähr 220°C einzustellen, damit auch das Standard-PET zuverlässig anschmilzt und einen stoffschlüssigen Verbund mit den angrenzenden Lagen eingeht. Die aus PET-G gebildete Ausgleichsfolie A160 verfließt in die den RFID-Chip 210 umgebenden Hohlräume in der Aussparung 170 und bettet diesen damit vollständig ein. Damit wird der von außen auf den Stapel ausgeübte Druck gleichmäßig auf den Chip 210 und dessen Umgebung ausgeübt, sodass dieser und die Anschlüsse 190 nicht geschädigt werden. Außerdem werden die Hohlräume ausgefüllt und etwaige Luft ausgetrieben. Dies kann zusätzlich durch Einstellen von Vakuumbedingungen beim Verpressen befördert werden.

Wenn anstelle von Standard-PET an den Außenseiten des Stapels PET-G als Material für die Overlayfolien A130 verwendet wird, kann die Laminiertemperatur entsprechend abgesenkt werden, beispielsweise auf einen Wert im Bereich von 160°C bis 180°C.

Der derart hergestellte Polymerfolienverbund 100 liegt vorzugsweise in Form eines Mehrfachnutzens vor, aus dem einzelne Nutzen beispielsweise durch Ausstanzen herausgetrennt werden können. Diese Nutzen können Rohexemplare für Wert- und/oder Sicherheitsdokumente, beispielsweise eine ID-Karte, sein. Diese Rohexemplare werden nachträglich personalisiert, indem die persönlichen Daten, beispielsweise das Geburtsdatum und der Geburtsort, der Name, Wohnsitz und ein Gesichtsbild der Person, im Rohexemplar erzeugt werden. Hierzu wird das Rohexemplar gezielt Laserbestrahlung ausgesetzt, sodass die in den laserfähigen PC-Folien B120 enthaltenen Laserinitiatoren geschwärzt werden. Dadurch wird die ID-Karte 400 gebildet, die in Fig. 6 gezeigt ist. Diese weist ein Gesichtsbild 410 sowie die vorgenannten persönlichen Daten im Beschriftungsfeld 420 auf. Das RFID-Bauteil aus dem Chip 210 und der Antenne 220 ist nur schematisch angedeutet, da diese von außen nicht sichtbar sind.

In Fig. 7 ist ferner die Abhängigkeit der Scherspannung von der Schergeschwindigkeit für verschiedene Typen von nichtnewtonschen Fluiden schematisch dargestellt. Auf der Ordinate sind die Scherspannung, typischerweise in [N/cm$^2$] angegeben, und auf der Abszisse die Schergeschwindigkeit, typischerweise in [cm/s] angegeben, aufgetragen. In beiden Fällen liegt die Schergeschwindigkeit bei kleinen Werten der Scherspannung bei Null, d.h. das Fluid verhält sich wie ein Festkörper. Erst mit dem Überschreiten eines Minimalwertes wird die Schergeschwindigkeit größer als Null, d.h. das Fluid beginnt zu fließen. Im Falle der Bingham-Fluide (b) steigt die Scherspannung mit ansteigender Schergeschwindigkeit linear an, während die Scherspannung von der Schergeschwindigkeit im Falle der Casson-plastischen Fluide (a) ungefähr einer Quadratwurzel-Beziehung folgen.

**Patentansprüche**

1. Verfahren zum flächigen Verbinden von mindestens zwei Polymerfolien (Axxx, Byyy) mittels eines Laminierverfahrens, umfassend folgende Verfahrensschritte: (a) Bereitstellen mindestens einer Polymerfolie eines ersten Typs (Axxx) und mindestens einer Polymerfolie eines zweiten Typs (Byyy); (b) Bilden eines Stapels der mindestens zwei Polymerfolien des ersten Typs (Axxx) und des zweiten Typs (Byyy), sodass mindestens eine Polymerfolie des ersten Typs (Axxx) und mindestens eine Polymerfolie des zweiten Typs (Byyy) unmittelbar aneinander anliegen; und (c) Verpressen des Stapels mit einem Pressdruck und bei einer Laminiertemperatur, bei der die mindestens zwei Polymerfolien (Axxx, Byyy) erweichen und miteinander verbunden werden, wobei die mindestens eine Polymerfolie des ersten Typs (Axxx) im Wesentlichen aus einem Polyethylenterephthalat gebildet ist und wobei die mindestens eine Polymerfolie des zweiten Typs (Byyy) im Wesentlichen aus einem Polycarbonat gebildet ist, **dadurch gekennzeichnet, dass** der Pressdruck kleiner als 8 N/cm$^2$ ist und kleiner ist als eine Schubspannung, bei der eine Schergeschwindigkeit der mindestens zwei in einen schmelzflüssigen Zustand versetzten Polymerfolien gerade noch Null ist.

2. Verfahren nach Anspruch 1, **dadurch gekennzeichnet, dass** die mindestens eine Polymerfolie des ersten Typs (Axxx) eine erste Erweichungstemperatur und die mindestens eine Polymerfolie des zweiten Typs (Byyy) eine zweite Erwelchungstemperatur haben und dass die Erweichungstemperaturen der Polymerfolien des ersten Typs (Axxx) und des zweiten Typs (Byyy) unterschiedlich sind.

3. Verfahren nach Anspruch 2, **dadurch gekennzeichnet, dass** der Quotient der Flächengröße der mindestens einen Polymerfolie des ersten Typs (Axxx) oder des zweiten Typs (Byyy) mit der niedrigeren Erweichungstemperatur zu deren Dicke größer als 7850 ist.

4. Verfahren nach Anspruch 2, **dadurch gekennzeichnet, dass** der Quotient der Länge der kürzesten Flächendiagonale der mindestens einen Polymerfolie des ersten Typs (Axxx) oder des zweiten Typs (Byyy) mit der niedrigeren Erweichungstemperatur zu deren Dicke größer als 100 ist.

5. Verfahren nach einem der vorstehenden Ansprüche, **dadurch gekennzeichnet, dass** die mindestens eine Polymerfolie des ersten Typs (Axxx) im Wesentlichen aus aus Terephthalsäure oder einem Derivat davon und Ethylenglykol gebildetem Standard-PET oder aus aus Terephthalsäure oder einem Derivat davon und 1,4-Cyclohexandimethanol gebildetem PET-G oder aus einem Gemisch von Standard-PET und PET-G gebildet ist.

**Claims**

1. Method for connecting at least two polymer films (Axxx, Byyy) over their surface area by means of a lamination process, comprising the following method steps: (a) supplying at least one polymer film of a first type (Axxx) and at least one polymer film of a second type (Byyy); (b) forming a stack from the at least two polymer films of the first type (Axxx) and of the second type (Byyy) such that at least one polymer film of the first type (Axxx) and at least one polymer film of the second type (Byyy) lie directly against one another; and (c) compressing the stack at a pressing pressure and a laminating temperature at which the at least two polymer films (Axxx, Byyy) soften and are connected to one another, wherein the at least one polymer film of the first type (Axxx) is formed essentially from a polyethylene terephthalate, and wherein the at least one polymer film of the second type (Byyy) is formed essentially from a polycarbonate, **characterised in that** the pressing pressure is less than 8 N/cm$^2$ and is smaller than a shear stress at which a shear rate of the at least two polymer films transformed into a molten state is just still zero.

2. Method according to claim 1, **characterised in that** the at least one polymer film of the first type (Axxx) has a first softening temperature and at least one polymer film of the second type (Byyy) has a second softening temperature, and that the softening temperatures of the polymer films of the first type (Axxx) and of the second type (Byyy) are different.

3. Method according to claim 2, **characterised in that** the quotient of the surface area of the at least one polymer film of the first type (Axxx), or of the second type (Byyy) with the lower softening temperature, to its thickness is greater than 7850.

4. Method according to claim 2, **characterised in that** the quotient of the length of the shortest surface diagonal of the at least one polymer film of the first type (Axxx), or of the second type (Byyy) with the lower softening temperature, to its thickness is greater than 100.

5. Method according to any one of the preceding claims, **characterised in that** the at least one polymer film of the first type (Axxx) is formed essentially from standard PET, formed from terephthalic acid or a derivative thereof and ethylene glycol, or from PET-G, formed from terephthalic acid or a derivative thereof and 1,4-cyclohexanedimethanol, or from a mixture of standard PET and PET-G.

**Revendications**

1. Procédé pour assembler à plat au moins deux films polymères (Axxx, Byyy) au moyen d'un procédé de stratification, comprenant les étapes de procédé suivantes consistant à : (a) fournir au moins un film polymère d'un premier type (Axxx) et au moins un film polymère d'un deuxième type (Byyy) ; (b) former une pile des deux films polymères ou plus du premier type (Axxx) et du deuxième type (Byyy) de sorte qu'au moins un film polymère du premier typ (Axxx) et au moins un film polymère du deuxième type (Byyy) reposent directement l'un au niveau de l'autre ; et (c) comprimer la pile avec une pression de compression et à une température de stratification, à laquelle les deux films polymères ou plus (Axxx, Byyy) ramollissent et sont assemblés les uns aux autres, dans lequel l'au moins un film polymère du premier type (Axxx) est formé sensiblement à partir d'un téréphtalate de polyéthylène et dans lequel l'au moins un film polymère du deuxième type (Byyy) est formé sensiblement à partir d'un polycarbonate, **caractérisé en ce que** la pression de compression est inférieure à 8 N/cm$^2$ et est inférieure à une tension de poussée, à laquelle une vitesse de cisaillement des deux films polymères ou plus amenés dans un état liquide par fusion est précisément encore nulle.

2. Procédé selon la revendication 1, **caractérisé en ce que** l'au moins un film polymère du premier type (Axxx) a une première température de ramollissement et l'au moins un film polymère du deuxième type (Byyy) a une deuxième température de ramollissement, et **en ce que** les températures de ramollissement des films polymères du premier type (Axxx) et du deuxième type (Byyy) sont différentes.

3. Procédé selon la revendication 2, **caractérisé en ce que** le quotient de la dimension de surface de l'au moins un film polymère du premier type (Axxx) ou du deuxième type (Byyy) présentant la température de ramollissement la plus basse par rapport à leur épaisseur est supérieur à 7 850.

4. Procédé selon la revendication 2, **caractérisé en ce que** le quotient de la longueur de la diagonale de surface la plus courte de l'au moins un film polymère du premier type (Axxx) ou du deuxième type (Byyy) présentant la température de ramollissement la plus basse par rapport à leur épaisseur est supérieur à 100.

5. Procédé selon l'une quelconque des revendications précédentes, **caractérisé en ce que** l'au moins un film polymère du premier type (Axxx) est formé sensiblement à partir d'un PET standard formé à partir d'acide de téréphtalate ou d'un dérivé de ce dernier et d'éthylène glycol ou est formé à partir d'un PET-G formé à partir d'acide de téréphtalate ou d'un dérivé de ce dernier et de 1,4-cyclohexanediméthanol ou à partir d'un mélange de PET standard et de PET-

G.

100

A130

B120

B110

B120

A130

Fig.1

A130

A140

B120

A110

B120

A140

A130

Fig.2                    100

200

210

220

B150

Fig.3

300

210 170

A160

B150

190 220 190

Fig.4

14

Fig.5

Fig.6

Fig.7

**IN DER BESCHREIBUNG AUFGEFÜHRTE DOKUMENTE**

**In der Beschreibung aufgeführte Patentdokumente**

- DE 102007018450 A1
- DE 102009060862 A1
- DE 102006009128 A1
- DE 102007052949 A1

**In der Beschreibung aufgeführte Nicht-Patentliteratur**

- **SCOTT BLAIR.** The Success of Casson's Equation. *Rheologica Acta,* 1966, vol. 5, 184 ff